# EUROPÄISCHE PATENTSCHRIFT

(11) **EP 2 301 725 B1**
(45) Veröffentlichungstag und Bekanntmachung des Hinweises auf die Patenterteilung: **30.05.2012**
(21) Anmeldenummer: 10177622.7
(22) Anmeldetag: 20.09.2010
(51) Int. Cl.: B25J 9/10

(54) **Industrieroboter mit einem Schleppanschlag**
Industrial robot with a trailing stop
Robot industriel doté d'une butée d'entraînement

(30) Priorität: 29.09.2009 DE 102009043404
(43) Veröffentlichungstag der Anmeldung: 30.03.2011
(73) Patentinhaber: KUKA Roboter GmbH, 86165 Augsburg (DE)
(72) Erfinder: Reekers, Andre, 86163 Augsburg (DE)
(74) Vertreter: Patentanwälte Funk & Böss GbR

(56) Entgegenhaltungen:
- DE-U1- 29 616 401
- JP-A- 2005 131 736
- JP-A- 2006 068 886

## Beschreibung

Die Erfindung betrifft einen Industrieroboter mit einem Schleppanschlag.

Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarme mit mehreren Achsen und programmierbare Steuerungen (Steuervorrichtungen) auf, die während des Betriebs die Bewegungsabläufe des Industrieroboters steuern bzw. regeln.

Roboterarme umfassen im Wesentlichen ein Gestell und ein relativ zum Gestell bezüglich einer Drehachse drehbar gelagertes Karussell. Die Drehbewegung des Karussells relativ zum Grundgestell kann bei konventionellen Industrierobotern mittels Festanschlägen mechanisch auf weniger als 360° begrenzt werden.

Um eine Drehbewegung des Karussells relativ zum Gestell von mehr als 360° zu ermöglichen, offenbart die DE 296 16 401 U1 einen Industrieroboter, dessen Gestell eine konzentrisch zur Drehachse angeordnete teilkreisförmige Kulisse aufweist, in der ein Schleppanschlag gleitend gelagert ist. Am Karussell ist ein Mitnehmer angeordnet, der in der einen Drehrichtung des Karussells beim Erreichen der Kulisse mit der einen Seite des Schleppanschlags, und in der Gegenrichtung mit der gegenüberliegenden Seite zusammenwirkt und den Schleppanschlag jeweils bis zum Anschlag an dem gegenüberliegenden geschlossenen Ende der Kulisse mitführt. Der Schleppanschlag kann allseitig oder auch nur an den durch Reibung und Stoß beanspruchten Stellen mit einem dämpfenden Belag z.B. in Form von aufvulkanisiertem Gummi versehen werden. Damit der Schleppanschlag nicht verkippt, sondern über seine Gleitfläche sauber geführt wird, muss der Schleppanschlag eine gewisse Breite aufweisen.

Die Aufgabe der vorliegenden Erfindung ist es, einen verbesserten Industrieroboter mit einem Gestell, einem Karussell und einer zum Begrenzen einer Drehbewegung des Karussells relativ zum Gestell vorgesehenen mechanischen Anschlagvorrichtung anzugeben.

Die Aufgabe der Erfindung wird gelöst durch einen Industrieroboter, aufweisend einen mehrachsigen Roboterarm mit einem Gestell, einem relativ zum Gestell bezüglich einer Achse drehbar gelagerten Karussell und einer zum Begrenzen einer Drehbewegung des Karussells relativ zum Gestell vorgesehenen mechanischen Anschlagvorrichtung, die eine am Gestell angeordnete Kulisse mit an ihren Enden angeordneten Anschlägen, einen in der Kulisse angeordneten Schleppanschlag und einen am Karussell angeordneten Mitnehmer aufweist, wobei der Mitnehmer und die Kulisse derart ausgebildet sind, dass der Mitnehmer bei einer entsprechenden Drehbewegung des Karussells bezüglich der Achse in die Kulisse eingeführt wird und den Schleppanschlag gegen den relevanten Anschlag stößt, und der Schleppanschlag ein plastisch verformbares Dämpfungselement umfasst, das vorgesehen ist, aufgrund einer plastischen Verformung, hervorgerufen durch ein Stoßen des Schleppanschlags gegen den relevanten Anschlag durch den Mitnehmer, das Karussell zu bremsen.

Der erfindungsgemäße Industrieroboter umfasst demnach den Roboterarm mit einem Gestell und dem relativ zum Gestell um die Achse drehbar gelagerten Karussell. Die Drehbewegung des Karussells wird normalerweise aufgrund eines auf einer Steuervorrichtung des Industrieroboters laufenden Rechenprogramms beschränkt. Um jedoch auch die Drehbewegung des Karussells mechanisch zu begrenzen, umfasst der Roboterarm des erfindungsgemäßen Industrieroboters die Anschlagvorrichtung. Diese wiederum umfasst die Kulisse, die am Gestell angeordnet ist bzw. die Teil des Gestells sein kann, und den am Karussell angeordneten Mitnehmer, der gegebenenfalls Teil des Karussells ist. In der Kulisse ist der Schleppanschlag angeordnet, der bei einer entsprechenden Drehbewegung des Karussells von dem Mitnehmer gegen den relevanten Anschlag der Kulisse gestoßen wird, um den Drehwinkel des Karussell zu begrenzen. Aufgrund des Schleppanschlags wird es dem Karussell ermöglicht, eine Drehbewegung von 360° oder auch mehr auszuführen.

Um die Gefahr einer Beschädigung des Gestells und/oder des Karussells im Falle eines Zusammenstoßes des Mitnehmers und des Schleppanschlags bzw. des Schleppanschlags und des relevanten Anschlags der Kulisse zumindest zu verringern oder gar zu vermeiden, umfasst erfindungsgemäß der Schleppanschlag das plastisch verformbare Dämpfungselement. Dieses ist derart plastisch verformbar, dass es im Falle des Zusammenstoßens aufgrund seines plastischen Verformens Bewegungsenergie des Karussells aufnimmt, dadurch das Karussell bremst und gleichzeitig eine Vorraussetzung schafft, dass das Karussell und/oder das Gestell durch den Aufprall des Mitnehmers auf den Schleppanschlag bzw. durch den Aufprall des Schleppanschlags auf den relevanten Anschlag der Kulisse möglichst wenig, wenn nicht gar überhaupt nicht beschädigt wird bzw. werden.

Die Kulisse kann konzentrisch zur Achse und/oder teilkreisbogenförmig ausgebildet sein. Dadurch kann der Mitnehmer den Schleppanschlag in der Kulisse beim Zusammenstoß relativ günstig zum relevanten Anschlag führen.

Die Kulisse kann relativ einfach nach einer Variante des erfindungsgemäßen Industrieroboters ausgeführt werden, wenn sie einen Boden aufweist, auf dem der Schleppanschlag gleitet, und/oder seitliche Begrenzungswände aufweist, zwischen denen der Schleppanschlag geführt ist.

Die Anschläge der Kulisse des erfindungsgemäßen Industrieroboters können vorzugsweise als an den Enden der Kulisse angeordnete Anschlagflächen ausgebildet sein. Diese Anschlagflächen können beispielsweise Teil eines der oder beider Begrenzungswände sein.

Gemäß einer Ausführungsform des erfindungsgemäßen Industrieroboters weist der Schleppanschlag zwei Gleitplatten auf, zwischen denen das Dämpfungselement angeordnet, insbesondere befestigt ist. Die beiden Gleitplatten sind z.B. aus Metall, insbesondere aus Stahl. Die Gleitplatten können vorzugsweise derart ausgeführt sein, dass sie gegebenenfalls zwischen den Begrenzungswänden geführt sind und/oder gegebenenfalls auf dem Boden der Kulisse gleiten. Das Dämpfungselement kann dann derart ausgeführt sein, dass es gegebenenfalls vom Boden abgesetzt ist und/oder gegebenenfalls die Begrenzungswände der Kulisse nicht berührt.

Gemäß einer bevorzugten Variante des erfindungsgemäßen Industrieroboters ist jedoch der Schleppanschlag einstückig ausgeführt und wird lediglich durch das Dämpfungselement gebildet. Ein solches Dämpfungselement lässt sich relativ einfach und kostengünstig herstellen.

Um die plastische Verformbarkeit zu erhalten, kann nach einer Ausführungsform des erfindungsgemäßen Industrieroboters das Dämpfungselement aus einem plastisch verformbaren Material hergestellt sein. Geeignete plastisch verformbare Materialien sind z.B. Kunststoff, insbesondere Polyethen oder Polyethylen, oder insbesondere PE-HD, also ein Polyethen hoher Dichte.

Das Dämpfungselement kann auch aus Metall gefertigt sein und die Form eines gewellten Hohlzylinders, insbesondere die Form eines gewellten geraden Hohlkreiszylinders aufweisen. Ein solches Dämpfungselement hat z.B. die Form eines Wellrohrs. Beim Zusammenstoß wird der Hohlzylinder aufgrund seiner gewellten Form, insbesondere aufgrund seiner gewellten Mantelfläche quasi zusammengefaltet, also plastisch verformt, wodurch er Energie aufnimmt.

Der erfindungsgemäße Industrieroboter kann demnach den Vorteil bieten, dass die Anzahl von Dämpfungselementen oder Puffern auf ein einziges Dämpfungselement bzw. einen einzigen Puffer reduziert werden kann. Außerdem ist es möglich, den Bauraum, den der erfindungsgemäße Schleppanschlag benötigt, zu reduzieren.

Je nach Ausführungsform des erfindungsgemäßen Industrieroboters umfasst dessen Schleppanschlag einen Puffer bzw. ein Dämpfungselement, an dessen Enden gegebenenfalls Gleitplatten befestigt sind, die ein Verschieben des Schleppanschlags z.B. auf einer Gleitfläche gewährleisten. Der Puffer bzw. das Dämpfungselement dient zur Kraftbegrenzung bei einem Zusammenstoß mit dem Karussell bzw. dem Mitnehmer des Karussells vorzugsweise in beiden Drehrichtungen der Achse, bezüglich der das Karussell drehbar gelagert ist.

Gegebenenfalls wird Bauraum, den dieser Schleppanschlag benötigt, auf die Größe des Puffers bzw. des Dämpfungselements und gegebenenfalls zwei Gleitplatten reduziert. Ein potenzielles Verkippen des Schleppanschlags in der Kulisse kann beispielsweise dadurch verhindert werden, indem die Gleitplatten mittels des Puffers bzw. des Dämpfungselements auf Abstand gebracht werden.

Ein Ausführungsbeispiel der Erfindung ist exemplarisch in den beigefügten schematischen Figuren dargestellt. Es zeigen:
- Fig. 1: einen Industrieroboter mit einem ein Gestell und ein Karussell aufweisenden Roboterarm,
- Fig. 2: eine Seitenansicht des Gestells,
- Fig. 3: das Gestell in einer geschnittenen Darstellung und
- Fig. 4: eine Schnitt durch eine Kulisse des Gestells mit ei- nem Schleppanschlag.

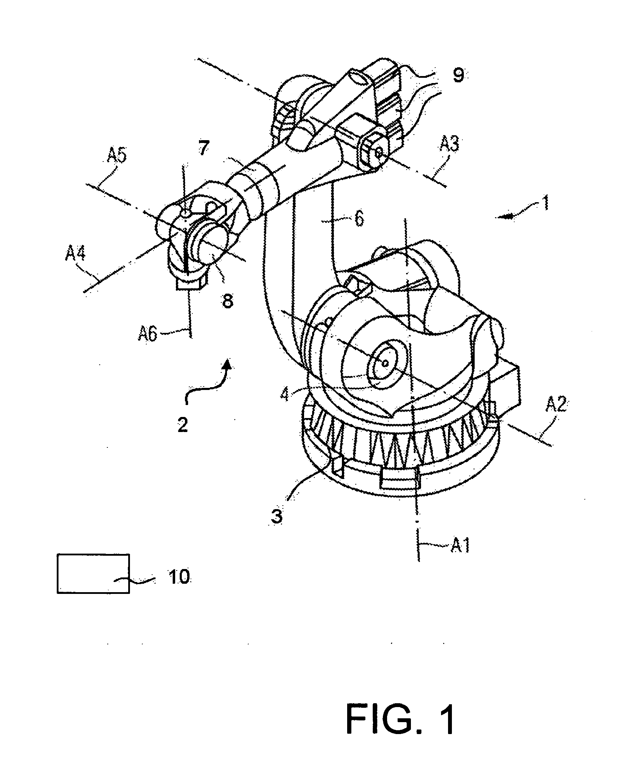

Die Fig. 1 zeigt in einer perspektivischen Darstellung einen Industrieroboter 1 mit einem Roboterarm 2.

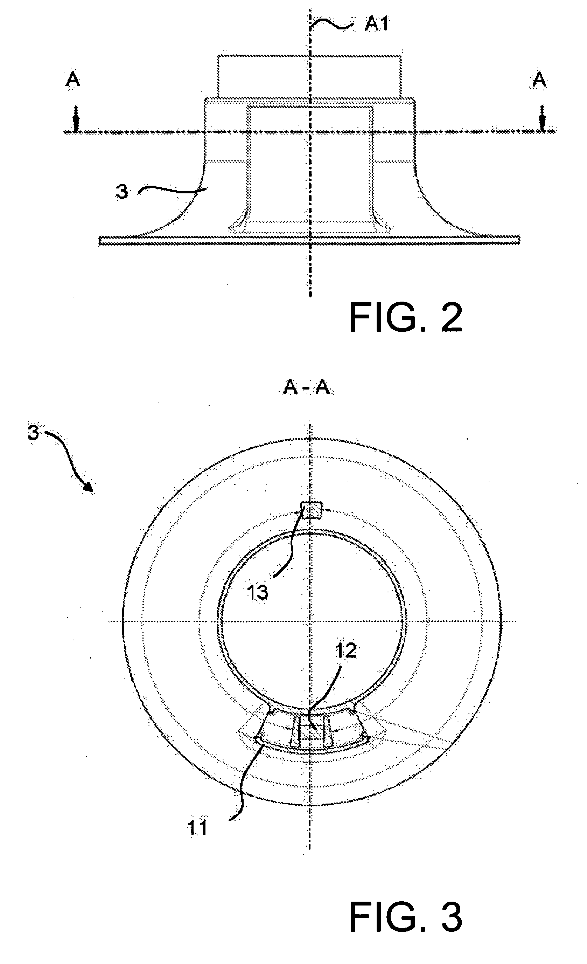

Der Roboterarm 2 umfasst im Falle des vorliegenden Ausführungsbeispiels ein ortsfestes oder bewegliches Gestell 3 und ein relativ zum Gestell 3 um eine vertikal verlaufende Achse A1, die auch als Achse 1 bezeichnet wird, drehbar gelagertes Karussell 4. Eine Seitenansicht des Gestells 3 ist in der Fig. 3 und ein Schnitt des Gestells 3 entlang der Linie A-A ist in der Fig. 3 gezeigt.

Der Roboterarm 2 des Industrieroboters 1 weist im Falle des vorliegenden Ausführungsbeispiels ferner eine Schwinge 6, einen Ausleger 7 und eine vorzugsweise mehrachsige Roboterhand 8 auf. Die Schwinge 6 ist am unteren Ende z.B. an einem nicht näher dargestellten Schwingenlagerkopf auf dem Karussell 3 um eine vorzugsweise horizontale Achse A2, die auch als Achse 2 bezeichnet wird, schwenkbar gelagert. Am oberen Ende der Schwinge 6 ist wiederum um eine ebenfalls vorzugsweise horizontale Achse A3 der Ausleger 7 schwenkbar gelagert. Dieser trägt endseitig die Roboterhand 8 mit ihren vorzugsweise drei Achsen A4, A5, A6.

Um den Industrieroboter 1 bzw. dessen Roboterarm 2 zu bewegen, umfasst dieser in allgemein bekannter Weise mit einer Steuervorrichtung 10 verbundene Antriebe, die insbesondere elektrische Antriebe sind. In der Figur 1 sind nur einige der elektrischen Motoren 9 dieser Antriebe gezeigt.

Im Falle des vorliegenden Ausführungsbeispiels ist der Industrieroboter 1 derart ausgeführt, dass eine vom Karussell 4 durchgeführte Drehbewegung bezüglich der Achse A1 mittels einer in der Fig. 3 dargestellten Anschlagvorrichtung mechanisch beschränkt wird.

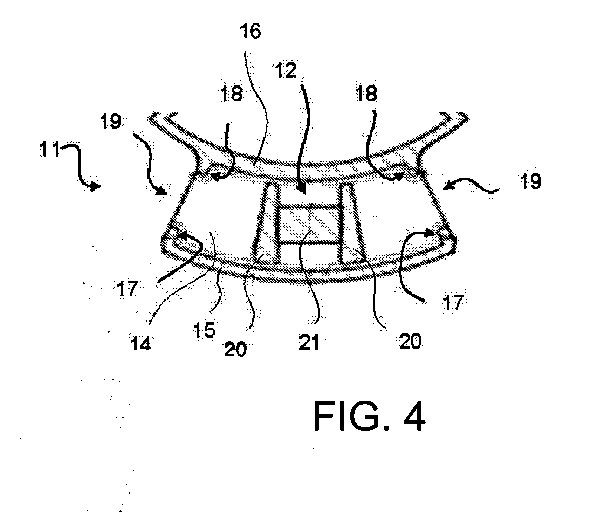

Im Falle des vorliegenden Ausführungsbeispiels umfasst die Anschlagvorrichtung eine am Gestell 3 befestigte Kulisse 11 mit einem darin geführten Schleppanschlag 12 und einen am Karussell 4 befestigten Mitnehmer 13. Die Kulisse 11 mit Schleppanschlag 12 ist in der Fig. 4 als Schnitt entlang der Linie A-A näher dargestellt.

Im Falle des vorliegenden Ausführungsbeispiels ist die Kulisse 11 konzentrisch zur Achse A1 ausgerichtet und teilkreisbogenförmig ausgeführt. Sie erstreckt sich beispielsweise über einen Bogenwinkel von etwa 60°.

Die Kulisse 11 weist beispielsweise einen Boden 14 und zwei am Boden 14 anschließende seitliche Begrenzungswände 15, 16 auf, zwischen denen der Schleppanschlag 12 geführt ist. An den beiden Enden der Kulisse 11 bilden die beiden Begrenzungswände 15, 16 jeweils Anschlagflächen 17, 18, gegen die der Mitnehmer 13 des Karussells 4 den Schleppanschlag 12 bei einer entsprechenden Drehbewegung des Karussells 4 bezüglich der Achse A1 stößt. Damit das Karussell 4 den Mitnehmer 13 bei einer entsprechenden Drehbewegung in die Kulisse 12 einführen kann, weist die Kulisse 12 an ihren beiden Enden jeweils Öffnungen 19 auf, die vom Boden 14 und den den Anschlagflächen 17, 18 zugeordneten Teilwänden der Begrenzungswände 15, 16 begrenzt werden.

Im Falle des vorliegenden Ausführungsbeispiels weist der Schleppanschlag 12 zwei Gleitplatten 20 und ein zwischen den beiden Gleitplatten 20 angeordnetes Dämpfungselement 21 auf. Die Gleitplatten 20 sind im Falle des vorliegenden Ausführungsbeispiels derart dimensioniert, dass sie auf dem Boden 14 der Kulisse 11 gleiten und von den Anschlagflächen 17, 18 vom Verlassen der Kulisse 11 gehindert werden. Die Gleitplatten 20 sind beispielsweise aus Metall, insbesondere aus Stahl.

Im Falle des vorliegenden Ausführungsbeispiels ist das Dämpfungselement 21 an den dem Dämpfungselement 21 zugewandten Seiten der Gleitplatten 20 befestigt. Außerdem kann das Dämpfungselement 21 derart dimensioniert sein, dass es die Begrenzungswänden 16, 17 und/oder den Boden 14 der Kulisse 11 nicht berührt.

Im Falle des vorliegenden Ausführungsbeispiels besteht das Dämpfungselement 21 aus einem plastisch verformbaren Material, so dass es relativ gut Energie absorbieren kann, wenn der Anschlag 13 des Karussells 4 den Schleppanschlag 12 gegen die Anschlagflächen 17, 18 stößt. Das Dämpfungselement 21 ist beispielsweise aus einem Kunststoff, insbesondere aus Polyethen oder Polyethylen (PE) hergestellt.

Das Dämpfungselement 21 kann z.B. auch aus Metall gefertigt sein und insbesondere die Form eines gewellten Hohlzylinders, insbesondere die Form eines gewellten geraden Hohlkreiszylinders haben, der insbesondere sich beim Aufprall des Schleppanschlags auf die Anschlagflächen 17, 18 plastisch verformt, um die Aufprallenergie zumindest teilweise zu absorbieren. In diesem Fall hat das Dämpfungselement 21 insbesondere die Form eines Wellrohrs.

Der Schleppanschlag 12 kann auch einstückig, insbesondere einstoffig ausgeführt sein. Ein solcher einstückiger bzw. einstoffiger Schleppanschlag 12 besteht im Wesentlichen lediglich aus dem Dämpfungselement 21 beispielsweise aus Kunststoff, insbesondere aus Polyethen oder Polyethylen, oder aus Metall in Form des gewellten Hohlzylinders.

## Patentansprüche

1. Industrieroboter, aufweisend einen mehrachsigen Roboterarm (2) mit einem Gestell (3), einem relativ zum Gestell (3) bezüglich einer Achse (A1) drehbar gelagerten Karussell (4) und einer zum Begrenzen einer Drehbewegung des Karussells (4) relativ zum Gestell (3) vorgesehenen mechanischen Anschlagvorrichtung, die eine am Gestell (3) angeordnete Kulisse (11) mit an ihren Enden angeordneten Anschlägen (17, 18), einen in der Kulisse (11) angeordneten Schleppanschlag (12) und einen am Karussell (4) angeordneten Mitnehmer (13) aufweist, wobei der Mitnehmer (13) und die Kulisse (11) derart ausgebildet sind, dass der Mitnehmer (13) bei einer entsprechenden Drehbewegung des Karussells (4) bezüglich der Achse (A1) in die Kulisse (11) eingeführt wird und den Schleppanschlag (12) gegen den relevanten Anschlag (17, 18) stößt, und der Schleppanschlag (12) ein plastisch verformbares Dämpfungselement (21) umfasst, das vorgesehen ist, aufgrund einer plastischen Verformung, hervorgerufen durch ein Stoßen des Schleppanschlags (12) gegen den relevanten Anschlag (17, 18) durch den Mitnehmer (13), das Karussell (4) zu bremsen.

2. Industrieroboter nach Anspruch 1, bei dem die Kulisse (11) konzentrisch zur Achse (A1) und/oder teilkreisbogenförmig ausgebildet ist.

3. Industrieroboter nach Anspruch 1 oder 2, bei dem die Kulisse (11) einen Boden (14) aufweist, auf dem der Schleppanschlag (12) gleitet, und/oder Begrenzungswände (15, 16) aufweist, zwischen denen der Schleppanschlag (12) geführt ist.

4. Industrieroboter nach einem der Ansprüche 1 bis 3, bei dem die Anschläge als an den Enden der Kulisse (11) angeordnete Anschlagflächen (17, 18) ausgebildet sind.

5. Industrieroboter nach einem der Ansprüche 1 bis 4, bei dem das Dämpfungselement (21) aus einem plastisch verformbaren Material hergestellt ist.

6. Industrieroboter nach Anspruch 5, bei dem das plastisch verformbare Material ein Kunststoff, insbesondere Polyethen oder Polyethylen, ist.

7. Industrieroboter nach einem der Ansprüche 1 bis 4, bei dem das Dämpfungselement (12) aus Metall gefertigt ist und die Form eines gewellten Hohlzylinders, insbesondere die Form eines gewellten geraden Hohlkreiszylinders aufweist.

8. Industrieroboter nach einem der Ansprüche 1 bis 7, bei dem der Schleppanschlag (12) zwei Gleitplatten (20) aufweist, zwischen denen das Dämpfungselement (21) angeordnet, insbesondere befestigt.ist.

9. Industrieroboter nach einem der Ansprüche 1 bis 8, bei dem der Schleppanschlag (12) einstückig ausgeführt ist und lediglich durch das Dämpfungselement (21) gebildet ist.

## Claims

1. Industrial robot comprising a multi-axle robot arm (2) with a frame (3), a carousel (4) mounted rotatably relative to the frame (3) in relation to an axis (A1) and a mechanical stop device provided for delimiting a rotational movement of the carousel (4) relative to the frame (3), which stop device comprises a gate (11) arranged on the frame (3) with stops (17, 18) arranged at its ends, a drag stop (12) arranged in the gate (11) and a driver (13) arranged on the carousel (4), wherein the driver (13) and the gate (11) are designed such that the driver (13) in a corresponding rotational movement of the carousel (4) relative to the axis (A1) is inserted into the gate (11) and the drag stop (12) hits the relevant stop (17, 18), and the drag stop (12) comprises a plastically deformable damping element (21) which is intended to brake the carousel (4) owing to a plastic deformation caused by the driver (13) causing the drag stop (12) to hit against the relevant stop (17, 18).

2. Industrial robot according to claim 1, wherein the gate (11) is designed to be concentric to the axis (A1) and/or partly arc-shaped.

3. Industrial robot according to claim 1 or 2, wherein the gate (11) comprises a base (14) on which the drag stop (12) slides, and/or delimiting walls (15, 16) between which the drag stop (12) is guided.

4. Industrial robot according to any one of claims 1 to 3, wherein the stops are designed as stop surfaces (17, 18) arranged at the ends of the gate (11).

5. Industrial robot according to any one of claims 1 to 4, wherein the damping element (21) is made from a plastically deformable material.

6. Industrial robot according to claim 5, wherein the plastically deformable material is plastic, in particular polythene or polyethylene.

7. Industrial robot according to any one of claims 1 to 4, wherein the damping element (12) is made of metal and has the shape of a corrugated hollow cylinder, in particular the shape of a corrugated straight hollow circular cylinder.

8. Industrial robot according to any one of claims 1 to 7, wherein the drag stop (12) comprises two sliding plates (20) between which the damping element (21) is arranged, in particular secured.

9. Industrial robot according to any one of claims 1 to 8, wherein the drag stop (12) is designed in one piece and is formed only by the damping element (21).

## Revendications

1. Robot industriel présentant un bras de robot (2) multiaxial comportant un bâti (3), un carrousel (4) monté rotatif par rapport au bâti (3) relativement à un axe (A1), et un dispositif de butée mécanique prévu pour limiter un mouvement de rotation du carrousel (4) par rapport au bâti (3), lequel présente une coulisse (11) agencée sur le bâti (3) avec des butées (17, 18) agencées à ses extrémités, une butée d'entraînement (12) agencée dans la coulisse (11) et un toc d'entraînement (13) agencé sur le carrousel (4), le toc d'entraînement (13) et la coulisse (11) étant réalisés de telle sorte que lors d'un mouvement de rotation correspondant du carrousel (4) par rapport à l'axe (A1), le toc d'entraînement (13) est introduit dans la coulisse (11) et heurte la butée d'entraînement (12) contre la butée (17, 18) principale, et la butée d'entraînement (12) comprenant un élément d'amortissement (21) plastiquement déformable qui est prévu pour freiner le carrousel (4) en raison d'une déformation plastique causée par un heurt de la butée d'entraînement (12) contre la butée (17, 18) principale, causé par le toc d'entraînement (13).

2. Robot industriel selon la revendication 1, dans lequel la coulisse (11) est réalisée de manière concentrique par rapport à l'axe (A1) et/ou en forme d'arc de cercle partiel.

3. Robot industriel selon la revendication 1 ou 2, dans lequel la coulisse (11) présente un fond (14), sur lequel glisse la butée d'entraînement (12), et/ou des parois de limitation (15, 16) entre lesquelles est guidée la butée d'entraînement (12).

4. Robot industriel selon l'une des revendications 1 à 3, dans lequel les butées sont réalisées sous forme de surfaces de butée (17, 18) agencées aux extrémités de la coulisse (11).

5. Robot industriel selon l'une des revendications 1 à 4, dans lequel l'élément d'amortissement (21) est réalisé en un matériau plastiquement déformable.

6. Robot industriel selon la revendication 5, dans lequel le matériau plastiquement déformable est une matière plastique, en particulier du polyéthène ou du polyéthylène.

7. Robot industriel selon l'une des revendications 1 à 4, dans lequel l'élément d'amortissement (21) est réalisé en métal et présente la forme d'un cylindre creux ondulé, en particulier la forme d'un cylindre circulaire creux droit ondulé.

8. Robot industriel selon l'une des revendications 1 à 7, dans lequel la butée d'entraînement (12) présente deux plaques de glissement (20) entre lesquelles l'élément d'amortissement (21) est agencé, en particulier fixé.

9. Robot industriel selon l'une des revendications 1 à 8, dans lequel la butée d'entraînement (12) est réalisée d'une seule pièce et formée uniquement par l'élément d'amortissement (21).
